## Europäisches Patentamt

## European Patent Office

## Office européen des brevets

(19)

(11) Veröffentlichungsnummer: **0 255 895**
**B1**

(12)

# EUROPÄISCHE PATENTSCHRIFT

(45) Veröffentlichungstag der Patentschrift:
27.06.90

(51) Int. Cl.⁵: **B29B 7/76**

(21) Anmeldenummer: **87110643.1**

(22) Anmeldetag: **23.07.87**

(54) Vorrichtung zum Mischen von wenigstens zwei reaktiven Kunststoffkomponenten.

(30) Priorität: 08.08.86 DE 3626990

(43) Veröffentlichungstag der Anmeldung:
17.02.88 Patentblatt 88/7

(45) Bekanntmachung des Hinweises auf die Patenterteilung:
27.06.90 Patentblatt 90/26

(84) Benannte Vertragsstaaten:
AT BE CH FR GB IT LI LU NL SE

(56) Entgegenhaltungen:
EP-A- 0 045 555
EP-A- 0 162 130
DE-A- 3 213 153
FR-A- 2 231 490

(73) Patentinhaber: Krauss-Maffei Aktiengesellschaft,
Krauss-Maffei-Strasse 2, D-8000 München 50(DE)

(72) Erfinder: Urban, Franz, Dipl.-Ing. (FH), Amselstrasse 18,
D-8201 Rohrdorf/Thansau(DE)
Erfinder: Bauer, Adolf, Ing.(grad.), Heideweg 25 b,
D-8037 Olching(DE)

Beschreibung

Die Erfindung bezieht sich auf eine Vorrichtung zum Mischen von wenigstens zwei reaktiven Kunststoffkomponenten gemäß dem Oberbegriff des Patentanspruchs 1. Eine derartige Mischvorrichtung ist allgemein bekannt.

Beim Mischen von reaktiven Kunststoffkomponenten, wie z.B. Isocyanat und Polyol bei der Herstellung von Polyurethan-Schaum, im Gegenstrom unter hohem Druck ( sog. Hochdruck-Gegenstrom-Injektionsverfahren ) treten zu Beginn des Dosiervolumens mehr oder weniger große Luftblasen auf, welche beim Füllen der Mischkammer in das mit hoher Geschwindigkeit austretende Komponentengemisch eingeschlagen werden. Falls die Mischkammer in ein Auslaufrohr übergeht, das zur Mischkammerachse rechtwinklig verläuft ( sog. Winkel- oder Umlenker-Mischkopf ),wird beim Füllen des Auslaufrohrs weitere Luft in das Komponentengemisch eingetragen.

Die Aufgabe der Erfindung besteht demgegenüber darin, eine Vorrichtung der eingangs erwähnten Art dahingehend zu verbessern, daß Lufteinschlüsse im Komponentengemisch auf einfache Weise vermieden werden.

Diese Aufgabe wird erfindungsgemäß durch die kennzeichnenden Merkmale des Patentanspruchs 1 gelöst.

Vorteilhafte Weiterbildungen und Ausgestaltungen der erfindungsgemäßen Mischvorrichtung ergeben sich aus den Unteransprüchen 2 und 3.

Ein Verfahren zum Steuern der erfindungsgemäßen Mischvorrichtung ist in dem Patentanspruch 4 angegeben.

Vorteilhafte Weiterbildungen und Ausgestaltungen des erfindungsgemäßen Steuerverfahrens ergeben sich aus den Unteransprüchen 5 und 6.

Die Erfindung beruht auf der Überlegung, durch eine als Schieber ausgebildete Verschlußeinrichtung das Auslaufrohr der Mischvorrichtung unmittelbar nach dem Ende einer Gegenstrominjektion ("Schuß") zu verschließen, wodurch die beim Stand der Technik mit Luft gefüllten Räume mit Reaktionsgemisch gefüllt bleiben, da das Reaktionsgemisch nicht vom Auslaufrohr in die Gießform abfließen kann. Der Schieber wird synchron zu dem in der Mischkammer reversierenden Steuer- und Reinigungskolben bewegt, so daß nach Beendigung des Ausstoßhubes des Steuer- und Reinigungskolbens ( wenn bei Freigabe der Injektionsöffnungen der nächste "Schuß" erfolgt ) der Schieber die Mündung des Auslaufrohrs wieder vollständig freigegeben hat. Das bei dem nächstfolgenden "Schuß" gebildete Reaktionsgemisch expandiert somit in die während des vorangegangenen "Schusses" gebildete und zurückgehaltene Komponentenfüllung, mit der vorteilhaften Folge, daß jedigliche Verwirbelung und Luftblasenbildung vermieden wird.

Alternativ kann der Schieber auch zum Androsseln des Auslaufrohrs bei der Gegenstrominjektion benutzt werden, wodurch sich insbesondere bei farbbeladenen Komponenten infolge der verbesserten Durchmischung eine völlig gleichmäßige Einfärbung des Kunststoffgemisches erzielen läßt. Diese Drosselwirkung des Schiebers kann bei den erwähnten Winkel-oder Umlenker-Mischköpfen die Drosselwirkung des im rechtwinkligen Auslaufrohr gelagerten weiteren Steuer- und Reinigungskolbens ergänzen. Bei sog. Geradeaus-Mischköpfen mit einem sich in Achsrichtung der Mischkammer erstreckenden Auslaufrohr ( welches von dem in der Mischkammer gelagerten Kolben gereinigt wird ), kann die Androsselung des Auslaufrohrs mittels des Schiebers ausreichend sein, so daß man auf weitere Drosselvorrichtungen insbesondere am Ende der Mischkammer verzichten kann.

Die Erfindung wird nachstehend an Hand der Zeichnungen näher erläutert, welche vier Betriebszustände einer bevorzugten Ausführungsform der erfindungsgemäßen Mischvorrichtung zeigen.

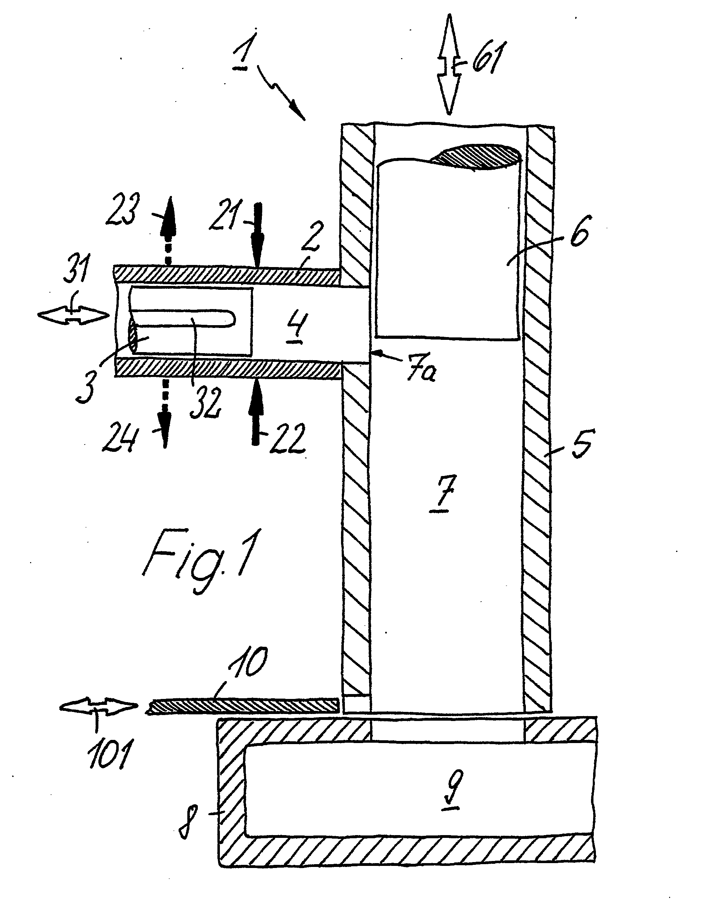

Der in den Figuren 1 bis 4 gezeigte Winkelmischkopf 1 enthält einen Mischzylinder 2, in welchem ein erster Steuer- und Reinigungskolben 3 reversierbar gelagert ist. Der hydraulische Antrieb für den Kolben 3 ist schematisch mit dem Doppelpfeil 31 angedeutet. Innerhalb des Mischzylinders 2 wird durch den Raum vor der Stirnfläche des Kolbens 3 eine Mischkammer 4 gebildet, in welche Injektionsöffnungen 21 und 22 für zwei reaktive Kunststoffkomponenten, z.B. für Isocyanat und Polyol, münden. Da diese Mündungen nicht in der Zeichenebene der Fign. 1 bis 4 sondern senkrecht hierzu liegen, sind die Injektionsöffnungen 21, 22 nur als Pfeile angedeutet. Den Injektionsöffnungen 21, 22 sind Rezirkulationsöffnungen 23 bzw. 24 im Mischzylinder 2 zugeordnet. Wie man erkennt, steuert die Vorderkante des Kolbens 3 die Gegenstrom-Hochdruckinjektion der beiden reaktiven Komponenten über die Injektionsöffnungen 21, 22. Wird der Kolben 3 aus der in Fig. 1 gezeigten Stellung vorwärtsbewegt, so werden die Injektionsöffnungen 21, 22 abgesperrt, was dem Ende eines "Schusses" entspricht. Gleichzeitig verbindet der nach rechts sich bewegende Kolben 3 über Längsnuten 32 ( von denen in den Figuren 1 bis 4 nur die eine Nut sichtbar ist, während die radial gegenüberliegende Nut verdeckt ist ) die Injektionsöffnung 21 mit der Rezirkulationsöffnung 23 und die Injektionsöffnung 22 mit der Rezirkulationsöffnung 24. Diese Steuerung der Rezirkulationsphase durch die Längsnuten ("Rezirkulationsnuten") 32 ist jedoch nicht zwingend, wenngleich es die vorteilhafteste Technik ist, um Rückstände von sich verhärtendem Reaktionsgemisch im Bereich des Mischkopfes 1 zu vermeiden.

An den Mischzylinder 2 schließt sich ein Auslaufrohr 5 an, dessen Querschnitt und Länge größer ist als der Querschnitt und die maximale Länge der Mischkammer 4, damit sich das mit hoher Geschwindigkeit und starker Turbulenz aus der Mischkammer 4 in das Auslaufrohr 5 austretende Komponentengemisch "beruhigen" kann und als laminarer Strahl in den Formhohlraum 9 der unterhalb des Auslaufrohrs 5 positionierten Gießform 8 eintreten kann. Das Auslaufrohr 5 verläuft mit seiner Längsachse rechtwinklig zur Längsachse der Mischkammer 4, wodurch sich die Bezeichnung "Winkelmischkopf" für die in den Figuren 1 bis 4 dargestellte Mischvorrichtung gebildet hat. Da der Gemischstrahl durch das Auslaufrohr 5 um 90° umgelenkt wird, findet sich auch die Bezeichnung "Umlenk-Mischkopf" für die Mischvorrichtung nach Fign. 1 bis 4.

Innerhalb des zylindrischen Auslaufrohrs 5 ist ein zweiter Steuer- und Reinigungskolben 6 reversierbar gelagert, wobei auch hier der hydraulische Antrieb für den Kolben 6 nur schematisch mit dem Doppelpfeil 61 angedeutet ist. Der Kolben 6 begrenzt eine Entspannungskammer 7, welche über einen schmalen Drosselspalt 7a mit der Mischkammer 4 in Verbindung steht. Der Drosselspalt 7a wird dadurch gebildet, daß der Kolben 6 in der gezeigten Stellung die Mündungsöffnung der Mischkammer 4 teilweise verschließt.

Der insoweit beschriebene Winkelmischkopf 1 ist allgemein bekannt. Erfindungsgemäß ist an der Mündung des Auslaufrohrs 5 ein Schieber 10 vorgesehen, welcher mit einem nur schematisch als Doppelpfeil 101 angedeuteten Hydraulikantrieb verbunden ist. Die verschiedenen Betriebsarten des Winkelmischkopfes 1 zugeordneten Stellungen des Schiebers 10 sind in den Figuren 1 bis 4 dargestellt, und zwar in Relation zu den Stellungen der Kolben 3 und 6.

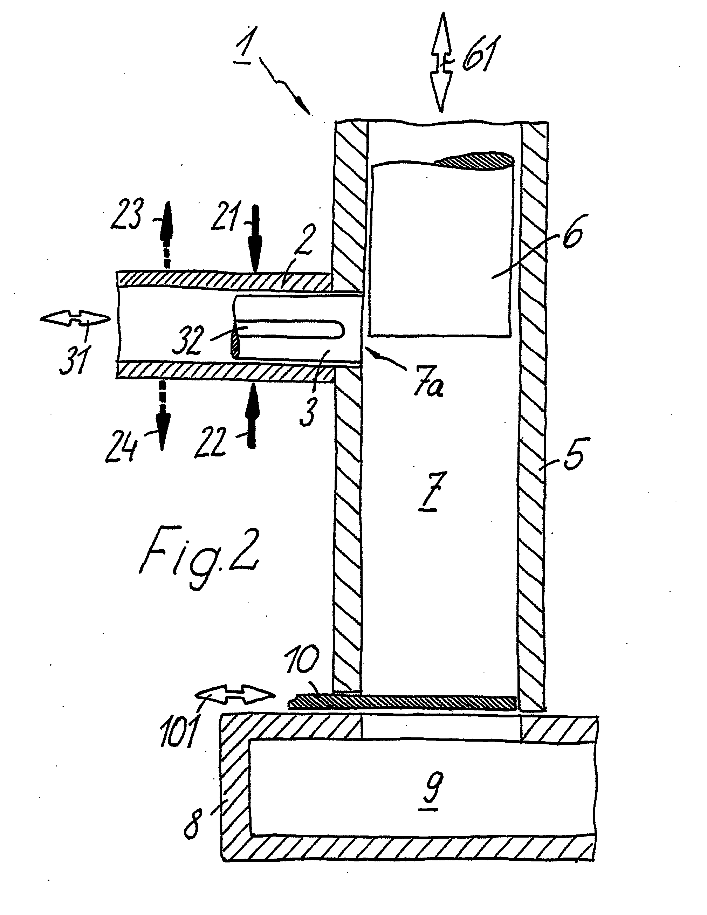

In Fig. 1 ist die erste Betriebsart, die Mischstellung, veranschaulicht. In dieser Stellung gibt der Kolben 3 die Injektionsöffnungen 21, 22 frei. Der Kolben 6 befindet sich in Drosselposition bezüglich der Mündungsöffnung der Mischkammer 4. Der synchron zu dem Kolben 3 gesteuerte Schieber 10 befindet sich in seiner zurückgezogenen Stellung, in welcher er die Mündung des Auslaufrohrs 5 vollständig freigibt. Diese Stellung der Kolben 3, 6 und des Schiebers 10 ist die Anfangsstellung für einen "Schuß". Beim ersten "Schuß" sind die Kammern 4 und 7 mit Luft gefüllt. Nach erfolgter Injektion werden der Kolben 3 und der Schieber 10 in Schließstellung gemäß Fig. 2 bewegt, bei deren Erreichen der Kolben 3 mit seiner Vorderkante bis zur Mündungsöffnung der Mischkammer 4 vorsteht ( und damit das restliche Reaktionsgemisch vollständig aus der Mischkammer 4 austrägt, also die Mischkammer 4 reinigt ) und der Schieber 10 die Mündung des Auslaufrohrs 5 vollständig verschließt. Wie man aus Fig. 2 erkennt, ist in dieser zweiten Betriebsart, der Schließstellung, das beim ersten "Schuß" erzeugte Gemisch in der Kammer 7 eingeschlossen, wobei das Gemisch die zuvor in den Kammern 4 und 7 befindliche Luftsäule bis zur vollständigen Schließung des Auslaufrohrs 5 aus der Kammer 7 heraus geschoben hat.

Bei dem sich an die Stellung gemäß Fig. 2 anschließenden Rückhub des Kolbens 3 und des Schiebers 10 ( bei unveränderter Drosselstellung des Kolbens 6 ) erreichen der Kolben 3 und der Schieber 10 wieder die Stellung nach Fig. 1, womit der nächste "Schuß" erfolgt. Das sich dabei bildende Reaktionsgemisch trifft wegen der Füllung der Kammer 7 mit Gemisch vom vorhergehenden "Schuß" nicht auf Luft, sondern auf beruhigtes Gemisch, so daß der ansonsten erfolgende Einschluß von Luft in das Reaktionsgemisch vollständig vermieden wird. Das sich expandierende Gemisch des zweiten "Schusses" treibt das davor befindliche Gemisch des ersten "Schusses" in den Formhohlraum 9, wobei infolge der Schließbewegung des Schiebers 10 das Auslaufrohr 5 dann wieder vollständig abgesperrt ist, wenn das Gemisch des zweiten "Schusses" an der Mündung des Auslaufrohrs 5 angekommen ist. Eine Befüllung des Formhohlraums 9 erfolgt somit erstmals nicht synchron zu jeder "Schußabgabe", sondern zeitversetzt um das Intervall zwischen zwei aufeinanderfolgenden "Schüssen".

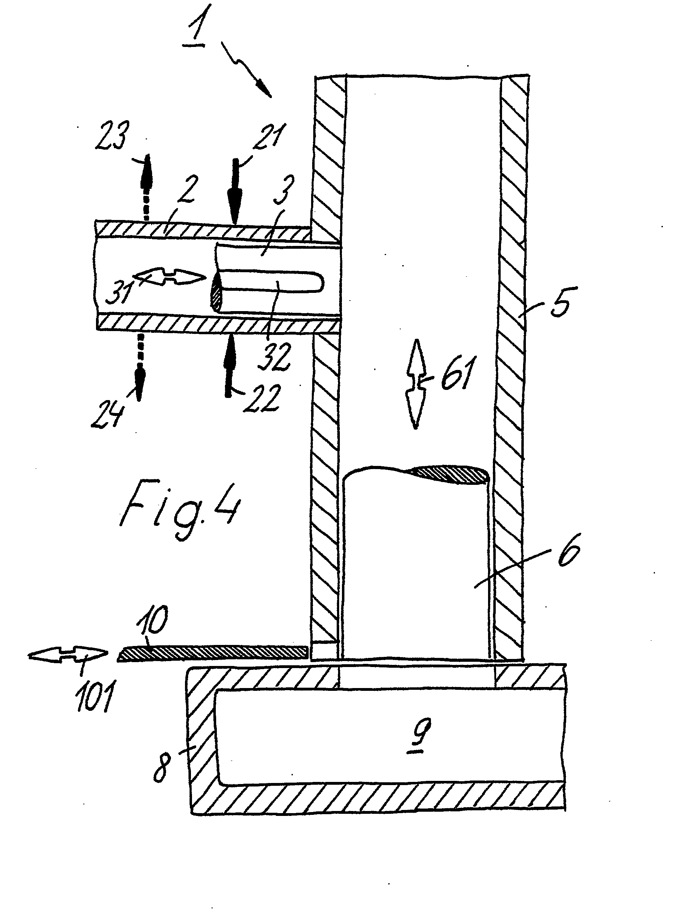

Um am Ende eines Betriebszyklus' das Auslaufrohr 5 von Reaktionsgemisch zu reinigen, wird bei der in Fig. 4 gezeigten dritten Betriebsart, der Reinigungsstellung, der Kolben 6 aus seiner bisherigen Drosselstellung gemäß Fign. 1 und 2 nach unten bewegt, so daß seine Vorderkante mit der Mündung des Auslaufrohrs 5 abschließt. In dieser Position befindet sich auch der Kolben 3 in seiner Reinigungsstellung, während der Schieber 10 zurückgezogen ist, um die Mündung des Auslaufrohrs 5 für den Kolben 6 freizugeben.

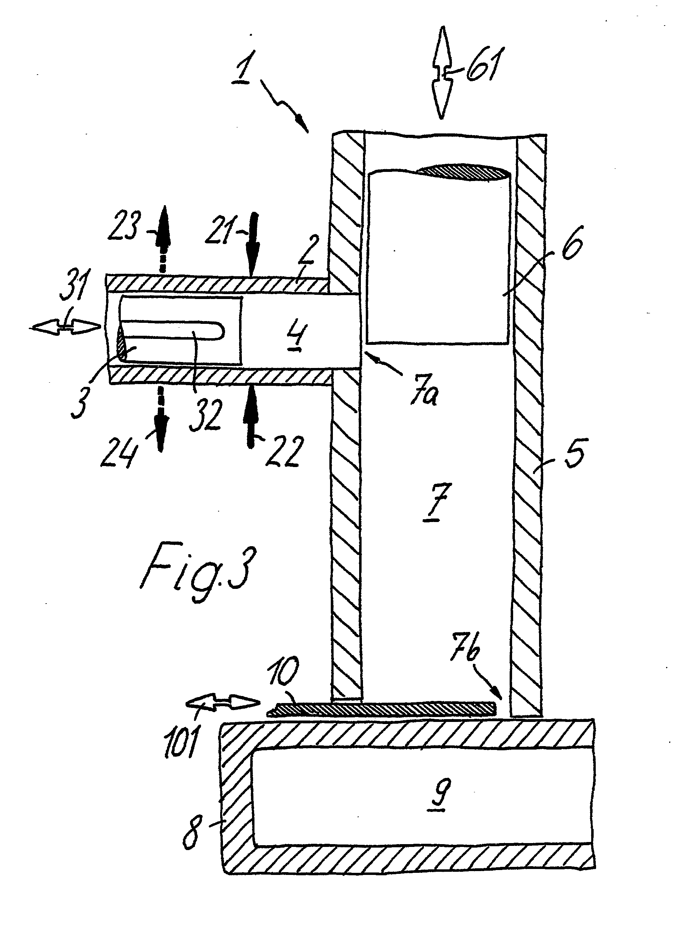

In Fig. 3 ist eine weitere Betriebsart veranschaulicht, in welcher der Schieber 10 ebenso wie der Kolben 6 unverändert in einer Drosselstellung verbleibt, während sich nur der Kolben 3 reversierend bewegt. Der Schieber 10 begrenzt dabei einen Drosselspalt 7b, welcher die Wirkung des Drosselspaltes 7a ergänzt und damit für eine besonders gute Durchmischung des Reaktionsgemisches sorgt, wie sie z.B. bei der Verarbeitung von farbbeladenen Komponenten erforderlich ist, um eine gleichmäßige Einfärbung des Spritzlings zu erhalten.

Die Erfindung ist nicht auf die in den Figuren 1 bis 4 gezeigte Anwendung auf Winkelmischköpfe beschränkt, sondern kann ebensogut auch bei sog. Geradeaus-Mischköpfen einsetzt werden, bei denen sich das Auslaufrohr in der Achse der Mischkammer erstreckt. Die Reinigung des Auslaufrohrs besorgt bei solchen Geradeaus-Mischköpfen der Mischkammerkolben, der einen entsprechend großen Reinigungshub bis an die Mündung des Auslaufrohrs ausführt.

Als weiter Vorteil neben der schon erwähnten Vermeidung von Lufteinschlüssen insbesondere beim "Anfahren" des Mischkopfes kommt hinzu, daß nach Schußende kein Material ausläuft, was bei dem Gießen auf Rundtischanlagen mit kreisförmig verteilten, kontinuierlich bewegten Gießformen wichtig ist, da kein Material zwischen die Gießformen auslaufen kann. Insbesondere bei der Herstellung von Schuhsolen aus Schaumkunststoff ist die Vermeidung von Lufteinschlüssen vorallem im vorderen Bereich des Gießstrahls von größtem Vorteil, da dieser Gießstrahlbereich die Außenränder der Schuhsohle formt und daher Lufteinschlüsse optisch besonders störend sind, was zu einer Nachbearbeitung der Außenränder zwingen würde.

## Patentansprüche

1. Vorrichtung zum Mischen von wenigstens zwei reaktiven Kunststoffkomponenten unter hohem Druck, mit einer zylindrischen Mischkammer (4), in welche die Kunststoffkomponenten im Gegenstrom injiziert werden, wobei zur Steuerung der Komponenteninjektion sowie zum Austragen von restlichem reaktivem Kunststoffgemisch innerhalb der Mischkammer ein reversierbarer Steuer- und Reinigungskolben (3) angeordnet ist, und mit einem Auslaufrohr (5), welches sich an die Mischkammer anschließt und gegebenenfalls unter einem rechten Winkel zur Längsachse der Mischkammer verläuft, dadurch gekennzeichnet, daß die Mündung des Auslaufrohrs (5) mittels eines Schiebers (10) ganz oder teilweise verschließbar ist.

2. Vorrichtung nach Anspruch 1, dadurch gekennzeichnet, daß bei einem rechtwinkligen Verlauf des Auslaufrohrs (5) zur Längsachse der Mischkammer (4) ein weiterer reversierbarer Steuerund Reinigungskolben (6) innerhalb des Auslaufrohrs (5) angeordnet ist.

3. Vorrichtung nach Anspruch 1, dadurch gekennzeichnet, daß der reversierbare Steuer- und Reinigungskolben (3) innerhalb der Mischkammer (4) für jede reaktive Kunststoffkomponente eine Längsnut (32) aufweist, welche einen Rezirkulationsweg für die zugeordnete Kunststoffkomponente zwischen jeweils zwei aufeinanderfolgenden Injektionen steuert.

4. Verfahren zum Steuern einer Vorrichtung gemäß einem der Ansprüche 1 bis 3, dadurch gekennzeichnet, daß in einer ersten Betriebsart ( Mischstellung ) der Steuer- und Reinigungskolben (3) die Injektion der reaktiven Kunststoffkomponenten in die Mischkammer (4) freigibt sowie der Schieber (10) die Mündung des Auslaufrohrs (5) zumindest teilweise freigibt.

5. Verfahren nach Anspruch 4, dadurch gekennzeichnet, daß in einer zweiten Betriebsart ( Schließstellung ) der Steuer- ünd Reinigüngskolben (3) und der Schieber (10) synchron zueinander in Schließposition bewegt werden, in welcher die Vorderkante des Steuer- und Reinigungskolbens (3) mit der Mündung der Mischkammer (4) abschließt und der Schieber (10) die Mündung des Auslaufrohrs (5) vollständig zu einem Zeitpunkt absperrt, an welchem die in dem Auslaufrohr (5) anfänglich vorhandene Luftsäule durch das während der ersten Betriebsart gebildete reaktive Kunststoffgemisch im wesentlichen verdrängt ist, und
daß in einer dritten Betriebsart (Reinigungsstellung) der Steuer- und Reinigungskolben (3) oder – im Falle eines abgewinkelten Auslaufrohrs – der weitere Steuer- und Reinigungskolben (6) bis zu der vom Schieber (10) vollständig freigegebenen Mündung des Auslaufrohrs (5) vorwärtsbewegt werden.

6. Verfahren nach Anspruch 5, dadurch gekennzeichnet, daß der weitere Steuer- und Reinigungskolben (6) in der ersten und zweiten Betriebsart in einer Stellung gehalten wird, in welcher er die Mündung der Mischkammer (4) unter Ausübung einer Drosselung derselben teilweise verschließt.

## Claims

1. Apparatus for mixing at least two reactive plastics components under high pressure, with a cylindrical mixing chamber (4), into which the plastics components are injected in a counter current, wherein a reciprocating control and cleaning piston (3) is arranged inside the mixing chamber to control injection of the components and to discharge remaining reactive plastics mixture, and with an outlet tube (5) which is connected to the mixing chamber and optionally extends at a right angle to the longitudinal axis of the mixing chamber, characterised in that the mouth of the outlet tube (5) can be sealed completely or partially by means of a sliding member (10).

2. Apparatus according to claim 1, characterised in that, if the outlet tube (5) extends at right angles to the longitudinal axis of the mixing chamber (4), a further reciprocating control and cleaning piston (6) is arranged inside the outlet tube (5).

3. Apparatus according to claim 1, characterised in that the reciprocating control and cleaning piston (3) has, inside the mixing chamber (4) for each reactive plastics component, a longitudinal groove (32) which controls a recirculation path for the associated plastics component between each two successive injections.

4. A process for controlling apparatus according to one of claims 1 to 3, characterised in that, in a first phase of operation (mixing position), the control and cleaning piston (3) vacates the injection of the reactive plastics components into the mixing chamber (4), and the sliding member (10) at least partially vacates the mouth of the outlet tube (5).

5. A process according to claim 4, characterised in that, in a second phase of operation (closed position), the control and cleaning piston (3) and the sliding member (10) are moved synchronously to one another into the closed position in which the front edge of the control and cleaning piston (3) ends at the mouth of the mixing chamber (4) and the sliding member (10) completely blocks the mouth of the outlet tube (5) at a moment at which the air column initially present in the outlet tube (5) is substantially displaced by the reactive plastics mixture formed during the first phase of operation and in that, in a third phase of operation (cleaning position), the control and cleaning piston (3) or – in the case of an angled outlet tube – the further control and cleaning piston (6) are advanced to the mouth of the outlet tube (5) completely vacated by the sliding member (10).

6. A process according to claim 5, characterised in that the further control and cleaning piston (6), in the first and second phase of operation, is held in a position in which it partially seals the mouth of the mixing chamber (4) by throttling it.

## Revendications

1. Dispositif pour mélanger sous pression élevée au moins deux composants réactifs générateurs d'une matière plastique, ce dispositif comportant une chambre mélangeuse (4) cylindrique, dans laquelle les composants générateurs de la matière plastique sont injectés à contre-courant et un piston (3), à mouvement alternatif réversible, de commande et de nettoyage est disposé à l'intérieur de la chambre mélangeuse pour régler l'injection des composants et pour refouler le mélange réactif restant, générateur de la matière plastique, ce dispositif comportant également un tuyau (5) de sortie qui se raccorde à la chambre mélangeuse et forme éventuellement un angle droit avec l'axe longitudinal de la chambre mélangeuse, dispositif caractérisé en ce que l'embouchure du tuyau (5) de sortie peut être entièrement ou partiellement fermée à l'aide d'un registre (10).

2. Dispositif selon la revendication 1, caractérisé en ce qu'en cas de disposition du tuyau (5) de sortie perpendiculairement à l'axe longitudinal de la chambre mélangeuse (4), un autre piston (6) de commande et de nettoyage, à mouvement alternatif ou réversible, est disposé à l'intérieur du tuyau (5) de sortie.

3. Dispositif selon la revendication 1, caractérisé en ce que le piston (3) de commande et de nettoyage, à mouvement réversible ou alternatif à l'intérieur de la chambre mélangeuse (4), présente une rainure longitudinale (32) pour chaque composant réactif générateur de la matière plastique, cette rainure commandant un trajet de recirculation du composant associé, générateur de la matière plastique, entre deux injections qui se suivent chaque fois.

4. Procédé pour commander un dispositif selon l'une des revendications 1 à 3, caractérisé en ce que, dans un premier temps de fonctionnement (position de mélangeage), le piston (3) de commande et de nettoyage permet l'injection des composants réactifs, générateurs de la matière plastique, dans la chambre mélangeuse (4) et le registre (10) dégage au moins partiellement l'embouchure du tuyau (5) de sortie.

5. Procédé selon la revendication 4, caractérisé en ce que, dans un second temps de fonctionnement (position de fermeture), le piston (3) de commande et de nettoyage et le registre (10) sont déplacés en synchronisme mutuel à la position de fermeture dans laquelle l'arête avant du piston (3) de commande et de nettoyage affleure l'embouchure de la chambre mélangeuse (4), et le registre (10) ferme complètement l'embouchure du tuyau (5) de sortie jusqu'à un instant où la colonne d'air présente initialement dans le tuyau (5) de sortie est essentiellement refoulée par le mélange réactif, générateur de la matière plastique et qui s'est formé au cours du premier temps de fonctionnement, et en ce que, dans un troisième temps de fonctionnement (position de nettoyage) le piston (3) de commande et de nettoyage ou bien – dans le cas d'un tuyau de sortie coudé – l'autre piston (6) de commande et de nettoyage est ou sont déplacés vers l'avant, vers l'embouchure du tuyau (5) de sortie entièrement dégagée par le registre (10).

6. Procédé selon la revendication 5, caractérisé en ce que l'autre piston (6) de commande et de nettoyage est, au cours des premier et second temps de fonctionnement, maintenu en une position dans laquelle il ferme partiellement l'embouchure de la chambre mélangeuse (4) en exerçant un effet d'étranglement.

Fig.1

Fig.2

Fig.3

Fig.4